# EUROPEAN PATENT APPLICATION

(11) **EP 1 055 713 A2**
(43) Date of publication of application: **29.11.2000**
(21) Application number: 00101124.6
(22) Date of filing: 21.01.2000
(51) Int. Cl.: C09D 11/10

(54) **Water insoluble non-ionic graft copolymer binders**

(30) Priority: 28.05.1999 US 322255
(71) Applicant: E.I. DU PONT DE NEMOURS AND COMPANY, Wilmington Delaware 19898 (US)
(72) Inventor: Grezzo Page, Loretta Ann, San Diego, California 92128 (US); Pearlstine, Kathryn Amy, Wilmington, Delaware 19810 (US)
(74) Representative: Kann, Wolfgang, Dr.

(57) **Abstract**

Water insoluble non-ionic graft copolymers having a hydrophobic backbone comprising adhesion promoting monomers selected from the group consisting of beta-diketone monomers and ureido monomers, and at least two hydrophilic side chains each attached at a terminal end to the backbone and each comprising polyethylene oxide macromonomers are suitable for use as binders in aqueous coating compositions contain an aqueous vehicle having from 50% to 80% by weight water, at least one water soluble or water miscible organic co-solvent; and wherein the binder is soluble in the aqueous vehicle but substantially insoluble in water and are particularly well suited for use as ink jet inks for direct printing to vinyl or other hydrophobic substrates.

## Description

### Cross-Reference to Related Applications

This application is a continuation in part application of co-pending US Application No. 09/120,608, filed July 22, 1998 and entitled "Water Insoluble Non-Ionic Graft Copolymers."

### Background of the Invention

This invention relates to ink jet inks and, more particularly, to ink jet inks containing non-ionic graft copolymers that are soluble in aqueous vehicles but are substantially insoluble in water. The graft copolymers are particularly useful as film-forming binders in aqueous pigmented ink jet ink compositions and offer improved stability, durability and waterfastness.

For many reasons, aqueous dispersions are widely used as coating compositions, such as paints and inks. While these aqueous dispersions have the obvious environmental benefits over their solvent-based counterparts, the aqueous nature of the dispersion creates some unique disadvantages. For instance, the components in an aqueous dispersion need to be soluble or dispersible in the vehicle, which is mostly water. Thus, the coating tends to be sensitive to water or high moisture, which makes it unsuitable for many of its intended applications. To overcome this problem, a class of polymers known as binders has been developed. These binders, when added to the coating composition, are intended to function as film forming agents that effectively bind the various components of the coating together, particularly the pigment particles used in such coatings, as the coating dries or cures. The use of a proper binder can dramatically improve certain properties of the coating, such as resistance to smear, abrasion, water and washing (i.e., detergents).

An additional challenge is presented in selecting binders for ink applications, particularly ink jet inks. Ink jet ink printing is a form of digital printing in which droplets of ink are made to be ejected (i.e., "fire") from an orifice in a printhead or a spray nozzle in response to an electronic signal from, for example, a computer. Examples of ink jet printing include the thermal ink jet printing, piezoelectric ink jet printing, continuous ink jet printing and air brush printing.

While paints and other coating applications can be applied in a variety of ways, ink jet inks must be applied by ejecting or jetting small droplets of ink from an orifice in a printhead. In addition, the ink must be formulated such that it will not form a film on the components of the printhead (e.g., resistors used in thermal ink jet printheads), won't puddle on the orifice plate, and won't dry out and clog the openings in the orifice plate. Further, ink jet inks have a much narrower viscosity tolerance than do paints or similar coaling applications. Thus, it is far more difficult to formulate ink jet inks as compared to other coatings and, in particular, the requirements of the binder polymer are significantly more demanding. For example, whereas a paint might be formulated to contain 30-40% by weight of a binder polymer, an ink cannot tolerate more than about 20% as a theoretical maximum given the current printhead technology and, in most prior art, the binder content cannot exceed about 2-4% by weight of the ink composition.

In the past decade, ink jet printing, particularly the thermal and piezo forms, has become extremely popular for home office, small office and personal printer applications, primarily due to its relatively low cost, speed and quite operation. In more recent years, the popularity of ink jet printing has increased even further due to the introduction of systems (printers, software, media and inks) offering very high quality (near photographic) color and graphics capabilities. As the capabilities of ink jet technology increase, the use of such technology has expanded into other market segments, such as in large format and very large format applications. In general, the terms "large format" and "very large format" are used to define a class of printers that operate with a particular size media. For example, large format is commonly used to mean printers utilize media of not less than 17 inches in the smallest dimension and very large format is normally used to mean printers that utilize media of not less than about 60 inches in the smallest dimension. Such printers are used for applications such as banners, signage, displays, posters, billboards, as well as textile printing applications for clothing, fabrics, draperies, wallpapers and similar applications.

The use of ink jet printing in the large and very large format applications (for convenience, collectively referred to as "large format") has important advantages, not the least of which is the savings in short production runs over more traditional analogue printing methods. Yet there are also disadvantages. For example, the types of final products produced for these applications may be subject to the elements in outdoor usage (e.g. billboard or awning applications), laundering (e.g., clothing applications), abrasive friction (e.g., automobile interior fabrics), etc. and thus need to be far more lightfast, waterfast, washfast and abrasion resistant than typically required for office or home printing applications. While much improvement has been made in enhancing lightfastness and waterfastness of ink jet inks in recent past, due to the use of pigment colorants, there is a need in the art for improving the resistance of ink jet inks to smear, abrasion and washing.

While the use of binders to obtain such features might, in principle, seem a logical approach, in practice it has proven extremely difficult. For example, using binders with hydrophobic groups improves the durability of the printed image. However, such binders tend to have low solubility in water and cause clogging of print nozzles, film formation on resistors and printheads, and can destabilize pigmented inks. Binders with hydrophilic groups, on the other hand, offer superior print reliability and ink stability characteristics, but at the expense of durability of the printed image. Obtaining a balance between print reliability, ink stability and image durability has proven extremely difficult. In addition, as those skilled in the art will appreciate, ink jet inks have a relatively narrow formulation window around polymer content because of strict viscosity limitations for the final ink composition.

### Summary of the Invention

In one aspect, the invention comprises a non-ionic graft copolymer which is substantially insoluble in water, said copolymer comprising:
a) a hydrophobic backbone comprising adhesion promoting monomers selected from the group consisting of beta-diketone monomers and ureido monomers, and
b) at least two hydrophilic side chains each attached at a terminal end to the backbone and each comprising polyethylene oxide macromonomers.

In another aspect, the invention provides an aqueous coating composition comprising:
a) an aqueous vehicle comprising no more than 80% by weight water, the remainder of the vehicle comprising at least one water soluble or water miscible organic co-solvent; and
b) a non-ionic graft copolymer binder having
   (1) a hydrophobic backbone comprising adhesion promoting monomers selected from the group consisting of beta-diketone monomers and ureido monomers, and
   (2) at least two hydrophilic side chains each attached at a terminal end to the backbone and each comprising polyethylene oxide macromonomers;
   wherein the binder is soluble in the aqueous vehicle but substantially insoluble in water.

In particularly preferred embodiments, the coating is suitable for use as an ink jet ink (meaning it is jettable from an ink jet printer) and further comprises a colorant, preferably a pigment, and a polymer dispersant.

### Detail Description of the Embodiments

The invention provides water-insoluble non-ionic graft copolymers which are suitable for use in aqueous coating compositions as a binder and are particularly suitable for use in aqueous pigmented ink jet inks.

### Aqueous Vehicle

The aqueous vehicle is a mixture of water and at least one co-solvent and comprises no more than 80% by weight, of water. For ink jet ink applications, deionized water is typically used. The co-solvent used is determined primarily by the end use application. However, the co-solvent is water soluble or water miscible so as to form a single phase vehicle with water.

The precise composition of the aqueous vehicle will vary depending upon the type of composition being made, its ultimate use, the method of applying the composition, the type of substrate being coated and the other ingredients in the composition. Generally speaking for ink applications, the vehicle comprises preferably 60-70% water, with the balance being a mixture of one or more gylcols, glycol ethers and pyrrolidones. Representative water-miscible or water soluble co-solvents for ink applications are disclosed in US 5,221,334, incorporated herein by reference.

### Non-ionic Graft Copolymer

The graft copolymers suitable for use in the coating compositions of this invention comprise (1) a non-ionic hydrophobic backbone comprising polymerized ureido or beta-diketone monomers and (2) at least two non-ionic, hydrophilic side chains comprising polyethyleneoxide ("PEO") macromonomers. Each side chain is attached at a terminal end to the backbone. The graft copolymers are soluble in the vehicle, but substantially insoluble in water.

Graft polymers, also known as branched or comb polymers, are a specific type of polymer structure comprising a linear backbone and at least one side chain (also called arms) attached to and terminating at the backbone. If there is only one arm, the polymer has a structure resembling a T-shape. If more than one arm is present, the polymer resembles a comb.

The non-ionic hydrophilic side chains of the graft copolymer comprise PEO macromonomers. The macromonomers are soluble in water but are insoluble in non-polar organic solvents. The water-solubility of these macromonomers enable the graft copolymer to be miscible in an aqueous vehicle. The non-ionic nature of the side chain allows the binder to be washfast even to soaps and detergents, which are generally anionic or cationic and will solubilize species of the opposite ionic charge. The non-ionic nature of the side chains also reduces the risk of corrosion of metal pens or other application devices. The macromonomers are made from non-ionic monomers such as ethyoxytriethylene glycol methacrylate, methoxypolyethylene oxide methacryate, methoxypolyethylene oxide acryate, polyethylenoxide methacrylate, polyethylene oxide acrylate, N-vinyl pyrrolidone and the like.

The hydrophobic backbone serves as the water-insoluble, abrasion resistant portion of the graft copolymer and also serves to anchor the copolymer to the substrate. Specifically, the hydrophobic backbone contains polymerized ureido or beta-diketone monomers to improve adhesion of the coating composition (e.g., ink) to the substrate (e.g., paper, vinyl, etc.). Adequate adhesion may be obtained with as little as 3% by weight (based on the weight of the backbone) of the ureido and diketone monomers present. Preferably, these monomer comprise at least 5%, most preferably 5-40% by weight, based on the weight of the backbone.

The β-diketone monomers suitable for use in the hydrophobic backbone of the graft copolymer are those having structure (I): 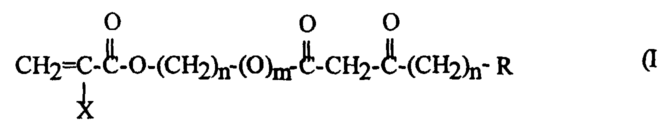 where X = CH₃ or H; n = 1 -10; m = 0 or 1; and R = H or an organic moiety.

The ureido monomers suitable for use in the hydrophobic backbone of graft copolymers are those having structure (II): 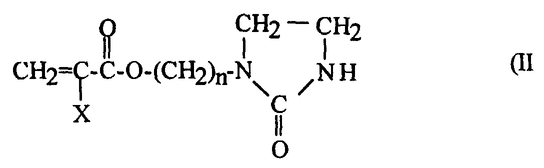 where X = CH₃ or H; and n = 1 - 10

In addition to the ureido and beta-diketone monomers, the hydrophobic backbone of the graft copolymer may also contain hydrophobic monomers such as methyl acrylate, methyl methacrylate, styrene, alpha-methyl styrene, phenyl acrylate, phenyl methacrylate, benzyl acrylate, benzyl methacrylate, 2-phenylethyl acrylate, 2-phenylethyl methacrylate, 2-phenoxyethyl acrylate, 2-phenoxyethyl methacrylate, 1-napthalyl acrylate, 2-naphthalyl acrylate, 2-naphthalyl methacrylate, p-nitrophenyl acrylate, p-nitrophenyl methacrylate, phthalimidomethyl acrylate, phthalimidomethyl methacrylate, N-phenyl acrylamide, N-phenyl methacrylamide, N-benzyl acrylamide, N-(2-phenylethyl)acrylamide, N-(2-phthalimidoethoxymethyl) acrylamide, vinyl benzoate, ethyl acrylate, n-butyl acrylate, 2-ethylhexyl acrylate, ethyl methacrylate, n-butyl methacrylate, t-butyl methacrylate, 2-ethylhexyl methacrylate, cyclohexyl methacrylate, vinyl acetate, vinyl butyrate, and the like. By selecting monomers of appropriate glass transition temperatures and crystallinity, binder properties such as hardness, flexibility, and durability can be adjusted.

Some suitable β-diketone or ureido-containing hydrophobic polymers include 2-(acetoacetoxy)ethyl methacrylate, 2-(acetoacetoxy)ethyl acrylate, methacrylamidoethylacetoxy acetate, hexadione methacrylate, 2-(acetoacetoxy) propyl methacrylate, N-(2-methacryloyloxyethyl)ethylene urea, and methacrylamidoethylethylene urea.

The hydrophobic backbone may contain up to 30% by weight, based on the total weight of the graft copolymer, of a hydrophilic non-ionic monomer, as listed above. Similarly, the hydrophilic side chains may contain up to 30% by weight, based on total weight of the graft copolymer, of a hydrophobic monomer, as listed above. The side chains have a number average molecular weight of at least 500, preferably 1,000 - 2,000. The side chains comprise 15 - 60% by weight of the graft copolymer, preferably 20 -50%. By adjusting the hydrophilic/hydrophobic balance of the backbone and side chains, the binder can be tailored for solubility in aqueous vehicles, while in itself being water insoluble.

Although random copolymers can be used as binders, they are not as effective in solubility and durability properties as graft copolymers. Since random copolymers exhibit the average properties of the individual monomers, balancing properties to yield binders which are soluble in aqueous vehicle while being substantially insoluble in water, which are durable, abrasion resistant and flexible, and which can be reliably applied from demanding devices such as an ink jet head is very difficult, if not impossible, to achieve.

The graft copolymers are prepared using standard techniques known to those skilled in the polymer art. Particular synthesis techniques and conditions are set forth in the examples.

### Other Ingredients

The coating compositions encompassed by this invention can contain other ingredients as desired for the particular application. For example, in the preferred embodiment the composition is intended for use as an ink jet ink. Accordingly, the composition will also contain a colorant, preferably a pigment, and a dispersant, preferably a polymeric dispersant, as is known in the art. In addition, standard ink adjuvants such as surfactants, biocides, sequestering agents, humectants, coalescents, viscosity modifiers, defoaming agents, UV absorbers, corrosion inhibitors, and the like may be used to advantage. Many of these types of additives are also used in other coating compositions (e.g., paints), although the precise compound used in each application is likely to be different.

For example, when the coating composition is intended for use as an overcoat composition to protect images on vinyl and other hydrophobic substrates, it has been found advantageous to incorporate a silicone or fluorinated surfactant. Such surfactants are disclosed in co-pending US Patent Application No. 08/867,373, filed June 2, 1997, the disclosure of which is incorporated herein by reference. Particularly preferred are the BYK brand of silicone surfactants from BYK-Chemie, the Silwet® brand of silicone surfactants from OSI Specialties and the Zonyl® brand of fluorinated surfactants from DuPont.

### Examples

### Polymer Preparations

### Polymer 1. benzyl methacrylate -b-methacrylic acid-co-ethoxytriethyleneglycol methacrylate block copolymer (15//13/13 degree of polymerization).

A flask was equipped with a mechanical stirrer, thermometer, N₂ inlet, drying tube outlet, and addition funnels. Tetrahydrofuran (1196 gm) was charged to the flask. The catalyst, tetrabutyl ammonium m-chlorobenzoate (0.829 ml of a 1.0 M solution in acetonitrile) was then added. Initiator, 1,1-bis(trimethylsiloxy)-2-methyl propene (60.0 gm; 0.257 M) was injected. Feed I (tetrabutyl ammonium m-chlorobenzoate, 0.829 ml of a 1.0 M solution in acetonitrile) was started and added over 180 minutes. Feed II (trimethylsilyl methacrylate, 531.21gm (3.36 M) and ethyoxtriethylene glycol methacrylate, 827.07 g, (3.36 M)) was started at 0.0 minutes and added over 35 minutes. One hundred minutes after Feed II was completed (over 99 % of the monomers had reacted) Feed III [benzyl methacrylate, 682.76 gm (3.87M)] was started and added over 30 minutes. At 400 minutes, 165 gm of methanol was added to the above solution and 2537 gm of material were distilled out. The final product was at 45% solids.

### Polymer 2. Methylmethacrylate-co-styrene-co-ureido ethyl methacrylate -g-methoxypolyethyleneglycol methacrylate graft copolymer (60/10/5//-g-25 weight percent).

A flask was equipped with a mechanical stirrer, thermocouple, N₂ inlet, and addition funnels. Dipropylene glycol methyl ether (891 gm), isopropanol (99 gm), methyl methacrylate (66 gm) and a 50% solution of methyoxypolyethyleneglycol methacrylate (Bisomer® S20W, International Specialty Chemicals) in water (55 gm) were added to the pot and heated to reflux. Feed I [Bisomer® S20W, 495 gm], Feed II [methyl methacrylate, 429 gm, styrene, 110 gm, and a 25/75 mixture of methylmethacrylate/ ureido ethyl methacrylate (Rohamere® 6844-0, Rohm Tech, Inc., 220 gm] and Feed III [VAZO® 67, 22 gm dissolved in dipropylene glycol methyl ether, 198 gm] were started at time 0.0 minutes. Feeds I and II were added over 300 min; Feed III was added over 330 min. After all feeds were complete, the reaction was refluxed for an additional 60 minutes. After reflux, 264 gm of isopropanol and water were stripped and 350.4 gm dipropylene glycol methyl ether were added. The final product was 41.2% solids.

### Polymer 3. Methylmethacrylate-co-styrene-g-methoxypolyethyleneglycol methacrylate graft copolymer (65/10//-g-25 weight percent).

A flask was equipped with a mechanical stirrer, thermocouple, N₂ inlet, and addition funnels. Dipropylene glycol methyl ether (405 gm), isopropanol (45 gm), methyl methacrylate (30 gm) and a 50% solution of methyoxypolyethyleneglycol methacrylate (Bisomer® S20W) in water (25 gm) were added to the pot and heated to reflux. Feed I [Bisomer® S20W, 225 gm], Feed II [methyl methacrylate, 429 gm, and styrene, 50 gm] and Feed III [VAZO® 67, 10 gm dissolved in dipropylene glycol methyl ether, 90 gm] were started at time 0.0 minutes. Feeds I and II were added over 300 min; Feed III was added over 330 min. After all feeds were complete, the reaction was refluxed for an additional 60 minutes. After reflux, 120 gm of isopropanol and water were stripped and 159.3 gm dipropylene glycol methyl ether were added. The final product was 42.6% solids.

### Polymer 4. Methylinethacrylate-co-styrene-co-ethoxytriethyleneglycol methacrylate-g-methoxypolyethyleneglycol methacrylate graft copolymer (60/10/5//-g-25 weight percent).

A flask was equipped with a mechanical stirrer, thermocouple, N₂ inlet, and addition funnels. Dipropylene glycol methyl ether (405 gm), isopropanol (45 gm), methyl methacrylate (30 gm) and a 50% solution of methyoxypolyethyleneglycol methacrylate (Bisomer® S20W) in water (25 gm) were added to the pot and heated to reflux. Feed I [Bisomer® S20W, 225 gm], Feed II [methyl methacrylate, 270 gm, styrene, 50 gm, and ethoxytriethyleneglycol methacrylate, 25 gm] and Feed III [VAZO® 67, 10 gm dissolved in dipropylene glycol methyl ether, 90 gm] were started at time 0.0 minutes. Feeds I and II were added over 300 min; Feed III was added over 330 min. After all feeds were complete, the reaction was refluxed for an additional 60 minutes. After reflux, 120 gm of isopropanol and water were stripped and 159.3 gm dipropylene glycol methyl ether were added. The final product was 41.2% solids.

### Polymer 5. Methylmethacrylate-co-styrene-g-methoxypolyethyleneglycol methacrylate graft copolymer (60/10//-g-30 weight percent).

A flask was equipped with a mechanical stirrer, thermocouple, N₂ inlet, and addition funnels. Dipropylene glycol methyl ether (810 gm), isopropanol (90 gm), methyl methacrylate (90 gm) and a 50% solution of methyoxypolyethyleneglycol methacrylate (Bisomer® S20W) in water (90 gm) were added to the pot and heated to reflux. Feed I [Bisomer® S20W, 510 gm], Feed II [methyl methacrylate, 510 gm, and styrene, 100 gm] and Feed III [VAZO® 67, 20 gm dissolved in dipropylene glycol methyl ether, 180 gm] were started at time 0.0 minutes. Feeds I and II were added over 300 min; Feed III was added over 330 min. After all feeds were complete, the reaction was refluxed for an additional 60 minutes. After reflux, 270 gm of isopropanol and water were stripped and 299.6 gm dipropylene glycol methyl ether were added. The final product was 41.1% solids.

### Polymer 6 Methylmethacrylate-co-styrene-co-acetoacetylethyl methacrylate-g-methoxypolyethyleneglycol methacrylate (40/10/20//-g-30 weight percent)

A flask was equipped with a mechanical stirrer, thermocouple, N₂ inlet, and addition funnels. Dipropylene glycol methyl ether (325 gm), isopropanol (36 gm), methyl methacrylate (24 gm), acetoacetylethyl methacrylate (12 gm) and a 50% solution of methyoxypolyethyleneglycol methacrylate (Bisomer® S20W) in water (36 gm) were added to the pot and heated to reflux. Feed I [Bisomer S20W, 204 gm], Feed II [methyl methacrylate, 136 gm, styrene, 40 gm, and acetoacetylethyl methacrylate, 68 gm] and Feed III [VAZO® 67, 8 gm dissolved in dipropylene glycol methyl ether, 72 gm] were started at time 0.0 minutes. Feeds I and II were added over 360 min; Feed III was added over 390 min. After all feeds were complete, the reaction was refluxed and additional 30 minutes. After reflux, 120 gm of isopropanol and water were stripped and 119.4 gm dipropylene glycol 108 ether were added. The final product was 40.4% solids.

### Polymer 7 Methylmethacrylate-co-styrene-co-ureidoethyl methacrylate-g-methoxypolyethyleneglycol methacrylate graft copolymer (50/10/10//-g-30 weight percent)

A flask was equipped with a mechanical stirrer, thermocouple, N₂ inlet, and addition funnels. Dipropylene glycol methyl ether (324 gm), isopropanol (36 gm), methyl methacrylate (36 gm) and a 50% solution of methyoxypolyethyleneglycol methacrylate (Bisomer® S20W) in water (36 gm) were added to the pot and heated to reflux. Feed I [Bisomer® S20W, 204 gm], Feed II [methyl methacrylate, 44 gm, styrene, 40 gm, and a 25/75 mixture of methylmethacrylate /ureidoethyl methacrylate (Rohamere® 6844-0 160 gm] and Feed III [VAZO® 67, 8 gm dissolved in dipropylene glycol methyl ether, 72 gm] were started at time 0.0 minutes. Feeds I and II were added over 360 min; Feed III was added over 390 min. After all feeds were complete, the reaction was refluxed and additional 60 minutes. After reflux, 108 gm of isopropanol and water were stripped and 119.4 gm dipropylene glycol methyl ether were added. The final product was 41.0% solids.

### Polymer 8 Methylmethacrylate-co-styrene-co-ureidoethyl inethacrylate-g-methoxypolyethyleneglycol methacrylate graft copolymer (50/10/5//-g-30 weight percent)

A flask was equipped with a mechanical stirrer, thermocouple, N₂ inlet, and addition funnels. Dipropylene glycol methyl ether (324 gm), isopropanol (36 gm), methyl methacrylate (36 gm) and a 50% solution of methoxypolyethyleneglycol methacrylate (Bisomer® S20W) in water (36 gm) were added to the pot and heated to reflux. Feed I [Bisomer® S20W, 204 gm], Feed II [methyl methacrylate, 124 gm, styrene, 40 gm, and a 25/75 mixture of MMA/ureido ethyl methacrylate (Rohamere® 6844-0, 80 gm] and Feed III [VAZO® 67, 8 gm dissolved in dipropylene glycol methyl ether, 72 gm] were started at time 0.0 minutes. Feeds I and II were added over 360 min; Feed III was added over 390 min. After all feeds were complete, the reaction was refluxed an additional 60 minutes. After reflux, 108 gm of isopropanol and water were stripped and 119.4 gm dipropylene glycol methyl ether were added. The final product was 41.2% solids.

### Magenta Pigment Concentrate

Polymer 1 (569.93 gm) quinacridone pigment (330 gm) and tetraethylene glycol (54 gm) were mixed and charged to a 2 roll mill and processed for 90 minutes. The 2 roll mill chip is then dissolved using dimethylamino ethanol as the neutralizing agent. The dissolved chip solution (178.77 gm) was then let down with dimethylamino ethanol (6.68 gm), deionized water (338.05 gm), dipropylene glycol monomethyl ether (75 gm) and Proxel® GXL (Zeneca, Inc., Wilmington DE) (1.5 gm) to make an aqueous, pigment concentrate that contained 14.4% pigment.

### Example #1

A series of inks were prepared having the following compositions:

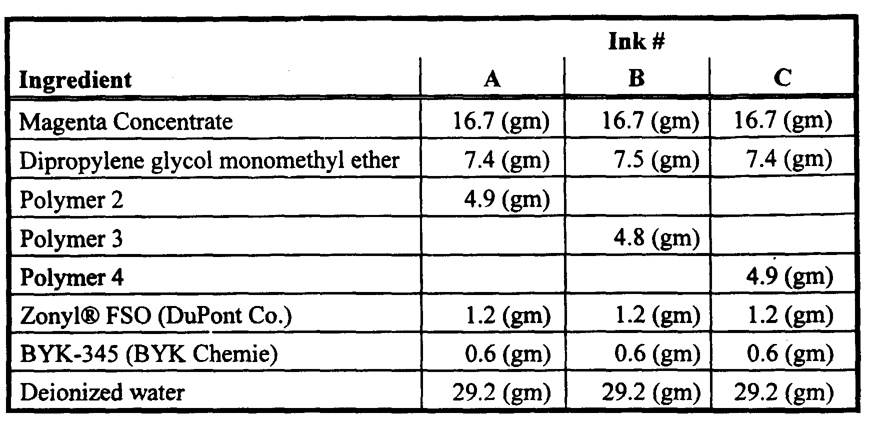

The inks were sprayed onto Avery® vinyl using an airbrush sprayer (Badger #200, Wilmington Blue Print, Inc., Wilmington, De). Sprayed media samples were dried at 70°C in an oven for 5 minutes. Samples were then rubbed with wet and dry paper towels and evaluated for rub resistance.

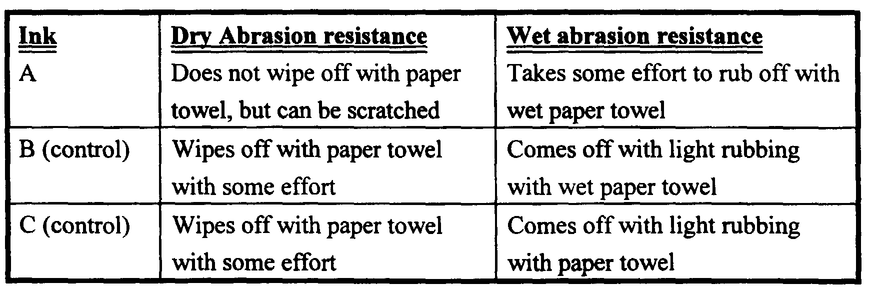

### Example #2

Two topcoat formulations were prepared having the following compositions:

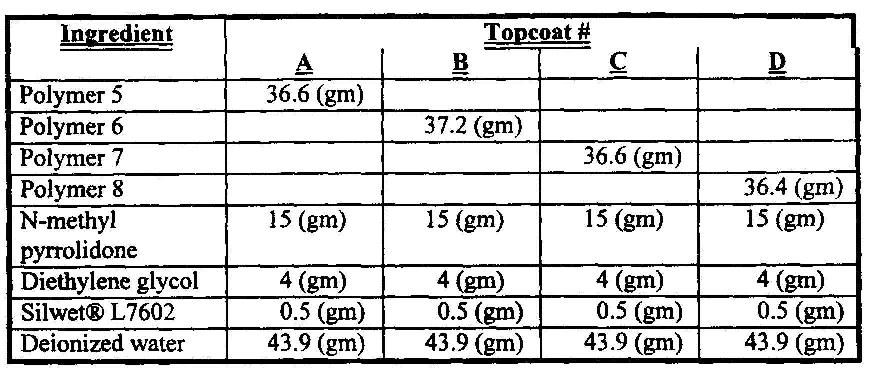

The clear topcoats were made by mixing the ingredients and was sprayed over a magenta ink image printed on Avery® vinyl. The topcoated samples were then dried at 60 °C and then placed in deionized water for 2 weeks. When the samples was removed from the water, it was scratched and rubbed with a paper towel. The samples' resistance to abrasion and rubbing were evaluated on a scale of 1-5, with 1 being poor and 5 being excellent. Results are reported below.

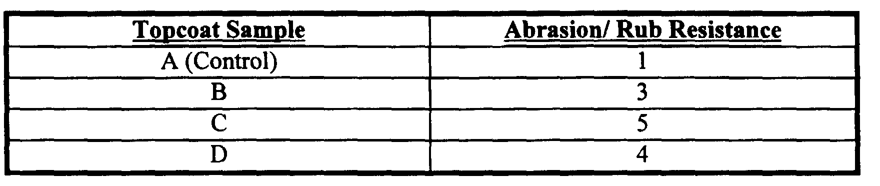

### Example #3

Ink A from Example 1 was placed in a clean print cartridge from a Hewlett Packard Model 870C thermal ink jet printer. A pattern which consisted of five vertical 1/8 inch (3.18 mm) solid lines, separated from each other by 5/16 inch (7.94 mm), was printed from an Hewlett Packard Model 870C printer onto Gilbert Bond paper. After printing, a highlighter was drawn across the parallel lines, once using an acidic yellow highlighter and once using a basic fluorescent yellow highlighter. There was no ink smear between the lines after highlighting. Also immediately after printing, 0.5 ml of deionized water was dripped across the imaged lines. There was no ink transfer resulting from the wet drip.

## Claims

1. An aqueous coating composition comprising
a) an aqueous vehicle comprising no more than 80% by weight water, the remainder of the vehicle comprising at least one water soluble or water miscible organic co-solvent; and
b) a non-ionic graft copolymer binder having
(1) a hydrophobic backbone comprising adhesion promoting monomers selected from the group consisting of beta-diketone monomers and ureido monomers, and
(2) at least two hydrophilic side chains each attached at a terminal end to the backbone and each comprising polyethylene oxide macromonomers;
wherein the binder is soluble in the aqueous vehicle but substantially insoluble in water.

2. The coating composition of claim 1, wherein the beta-diketone monomers are defined by structure (I): 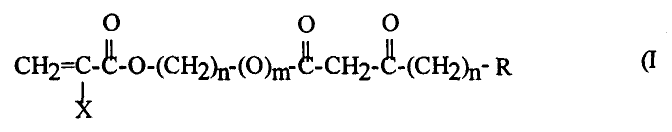 where X = CH₃ or H; n = 1 - 10; m = 0 or 1; and R = H or an organic moiety.

3. The coating composition of claim 1 wherein the ureido monomers are defined by structure (II): 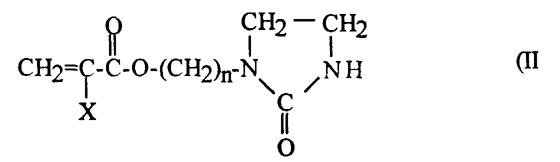 where X = CH₃ or H; and n = 1 - 10.

4. The coating composition of claim 1, wherein the macromonomers have a number average molecular weight of 1000-2000 and are
a) soluble in water but are insoluble in non-polar organic solvents; and
b) contain non-ionic monomers selected from the group consisting of ethyoxytriethylene glycol methacrylate, methoxypolyethylene oxide methacryate, methoxypolyethylene oxide acryate, polyethylenoxide methacrylate, polyethylenoxide acrylate, N-vinyl pyrrolidone, and mixtures thereof.

5. The coating composition of claim 1, wherein the macromonomers comprise 15 - 60% by weight of the graft copolymer.

6. The coating composition of claim 5, wherein the macromonomer side chains comprise 20 - 50% by weight of the graft copolymer.

7. The composition of claim 6, wherein said aqueous vehicle comprises 60-70% by weight of water based on the total weight of the vehicle.

8. The coating composition of claim 1, comprising:
a) an aqueous vehicle comprising water, a water miscible pyrrolidone, and a glycol ether, wherein water comprises no more than 80% by weight, based on the total weight of the vehicle;
b) a non-ionic graft copolymer binder having
(1) a hydrophobic backbone comprising adhesion promoting monomers selected from the group consisting of beta-diketone monomers and ureido monomers, and
(2) at least two hydrophilic side chains each attached at a terminal end to the backbone and each comprising polyethylene oxide macromonomers;
wherein the binder is soluble in the aqueous vehicle but substantially insoluble in water; and
c) a surfactant selected from the group consisting of silicon surfactants and fluorinated surfactants.

9. The coating composition of claim 1, further comprising a colorant and wherein the composition is formulated to be jettable from an ink jet printer.

10. The coating composition of claim 9, wherein said colorant comprises a pigment and wherein the composition further comprises a polymeric pigment dispersant.

11. A non-ionic graft copolymer comprising
a) a hydrophobic backbone comprising adhesion promoting monomers selected from the group consisting of beta-diketone monomers and ureido monomers, and
b) at least two hydrophilic side chains each attached at a terminal end to the backbone and each comprising polyethylene oxide macromonomers;
wherein the binder is substantially insoluble in water but soluble in an aqueous vehicle comprising 50-80% by weight water and at least one water-soluble or water-miscible organic co-solvent.
